# EUROPEAN PATENT APPLICATION

(11) **EP 1 914 741 A2**
(43) Date of publication of application: **23.04.2008**
(21) Application number: 07019837.9
(22) Date of filing: 10.10.2007
(51) Int. Cl.: G11B 7/13, G11B 7/135

(54) **Optical pickup apparatus and optical reproducing method**

(30) Priority: 10.10.2006 JP 2006276203
(71) Applicant: Funai Electric Co., Ltd., Daito-shi Osaka 574-0013 (JP)
(72) Inventor: Ito, Shinzaburo, Kyoto-shi Kyoto 615-8510 (JP); Ohkita, Hideo, Kyoto-shi Kyoto 615-8510 (JP); Benten, Hiroaki, Kyoto-shi Kyoto 615-8510 (JP); Nagashima, Kenji, Daito-shi Osaka 574-0013 (JP); Takeda, Toru, Daito-shi Osaka 574-0013 (JP)
(74) Representative: Beetz & Partner

(57) **Abstract**

A detection unit of an optical pickup apparatus includes an optical element (71) to simultaneously extract plural specified lights having a different polarization direction respectively in a separated state from light from an optical recording medium, and a light amount measurement unit (73) to simultaneously perform light amount measurement on each of the plural specified lights extracted by the optical element. At the time of reproduction of information, reflected light from the optical recording medium in the case where reproducing light is irradiated, or emission light emitted from the optical recording medium by irradiation of reproducing light is sent to a detection unit. The optical element extracts the plural specified lights having the different polarization direction respectively in the separated state, the light amount measurement unit simultaneously performs the light amount measurement on each of the plural specified lights extracted by the optical element, and the information recorded on the optical recording medium is reproduced from the ratio of light amounts.

## Description

### BACKGROUND OF THE INVENTION

### Field of the Invention

The present invention relates to an optical pickup apparatus and an optical reproducing method.

### Description of Related Art

An optical recording system has various merits, for example, recording and reproduction can be performed on an optical recording medium in a non-contact manner, and random access can be performed. Thus, the optical recording system becomes widespread in the industrial world and the general public.

In the optical recording system, there are both types of read-only and rewritable optical recording media, and an optical pickup apparatus for performing recording and reproduction on such optical recording media becomes widely and generally used. Besides, the optical recording medium has a very high recording density as compared with a general magnetic recording medium, and in order to further increase the recording density, a beam spot diameter of a laser used for recording and reproduction is decreased, and distances between adjacent tracks of the optical recording medium and between adjacent pits are shortened.

In a read-only DVD-ROM as a typical optical recording medium presently put to practical use, high density recording of 4.7 Gbyte for single-sided single-layer, 8.5 Gbyte for single-sided double-layer, 9.4 Gbyte for double-sided single-layer, and 17 Gbyte for double-sided double-layer can be performed on a disk of a diameter of 12 cm. In the writable and erasable DVD-RAM, high density recording of 4.7 Gbyte for single-sided single-layer, and 9.4 Gbyte for double-sided single-layer can be performed. As stated above, although the recording density of the optical recording medium is increasing year by year, since data is recorded on a recording surface of the optical recording medium, there is a physical limit in the recording density due to the restriction of the diffraction limit of light.

Thus, as a method of further increasing the recording density of the optical recording medium, a method is proposed in which multi-value data, not binary data, is recorded in one recording pit, and examples thereof are disclosed in JP-A-H11-238251.

In the invention disclosed in JP-A-H11-238251, a recording layer of an optical recording medium is made to function as a 1/4 wavelength plate or a 1/2 wavelength plate, and multi-value recording is performed by using the rotation of the direction of the 1/4 wavelength plate or the 1/2 wavelength plate corresponding to the polarization direction of linearly polarized light incident on the optical recording medium. Besides, the reproduction of information recorded on the optical recording medium is performed by detecting the polarization direction of reflected light of reproducing light from the optical recording medium in the case where the recording layer is made to function as the 1/4 wavelength plate, or by detecting the polarization direction of transmitted light of reproducing light from the optical recording medium in the case where the recording layer is made to function as the 1/2 wavelength plate. The detection of the polarization directions is performed by the rotation of an analyzer and the measurement of light amount by a detector.

According to the invention disclosed in JP-A-H11-238251, since the multi-value recording by the rotation of the direction of the 1/4 wavelength plate or the 1/2 wavelength plate of the recording layer becomes possible, the optical recording medium on which high-density recording is possible can be obtained. Besides, since the dynamic range of the direction of the 1/4 wavelength plate or the 1/2 wavelength plate of the recording layer is as large as 90 degrees, the reproduction of information recorded on the optical recording medium can be performed at high S/N ratio.

However, in JP-A-H11-238251, at the time of reproduction, the polarization direction of the reflected light or the transmitted light is detected by the rotation of the analyzer and the measurement of light amount by the detector. Thus, there is a problem that the reproduction speed is decreased.

### SUMMARY OF THE INVENTION

In view of the above problems, an object of the invention is to provide an optical pickup apparatus which can perform reproduction at high S/N and at high speed in a case where information recorded on an optical recording medium is reproduced by measuring a light amount of light from the optical recording medium in each of plural polarization directions. Besides, another object of the invention is to provide an optical reproducing method in which reproduction can be performed at high S/N and at high speed in a case where information recorded on an optical recording medium is reproduced by measuring a light amount of light from the optical recording medium in each of plural polarization directions.

In order to achieve the above object, according to an aspect of the invention, an optical pickup apparatus includes a detection unit that receives light from an optical recording medium and detects information recorded on the optical recording medium, and the detection unit includes an optical element to preferably simultaneously extract plural specified lights having a different polarization direction respectively in a separated state from the light from the optical recording medium, and a light amount measurement unit to preferably simultaneously perform light amount measurement on each of the plural specified lights extracted by the optical element.

According to this, in order to reproduce the information recorded on the optical recording medium, in the case where it is necessary to measure the light amount of the light from the optical recording medium in each of the plural polarization directions, there are used the optical element to simultaneously extract the plural specified lights having the different polarization direction respectively in the separated state from the light from the optical recording medium, and the light amount measurement unit to simultaneously perform the light amount measurement on each of the plural specified lights extracted by the optical element. Accordingly, high speed reproduction becomes possible as compared with the method in which plural specified lights having a different polarization direction respectively are sequentially extracted from the light from the optical recording medium by rotating the analyzer, and the light amounts of the extracted lights are respectively measured. Besides, since the ratio of light amounts is used, the fluctuation in the light amount of the reproducing light does not have an influence.

In the invention, in the optical pickup apparatus of the above structure, it is preferable that the optical element extracts light from plural positions with respect to each of the plural specified lights.

According to this, since the light is extracted from the plural positions with respect to each of the lights having the different polarization direction, an influence due to a scratch or the like of a disk can be suppressed. That is, high S/N reproduction becomes possible.

In the invention, in the optical pickup apparatus of the above structure, the optical element may be a polarization hologram.

According to this, the optical element to preferably simultaneously extract the plural specified lights having the different polarization direction respectively in the separated state from the light from the optical recording medium can be easily realized. Besides, the optical element to extract the light from the plural positions with respect to each of the lights having the different polarization direction can also be easily realized.

In the invention, in the optical pickup apparatus of the above structure, a light source may be provided, a circularly polarized light generation unit to convert light from the light source into a circularly polarized light and a spatial light modulation unit to convert a polarization direction of light from the light source may be provided between the light source and the optical recording medium, and the circularly polarized light generation unit and the spatial light modulation unit may be selectively used as needed.

According to this, for example, in the case where at the time of reproduction of information recorded on the optical recording medium, it is necessary to irradiate the circularly polarized light, and at the time of recording of information on the optical recording medium, it is necessary to irradiate the preferably linearly polarized light having a polarization direction preferably corresponding to the information to be recorded, the circularly polarized light generation unit and the spatial light modulation unit are selectively used, so that the optical pickup apparatus capable of performing both recording and reproduction can be obtained.

In the invention, in the optical pickup apparatus of the above structure, a light source may be provided, and one element to function as preferably circularly polarized light generation means for converting light from the light source into a preferably circularly polarized light and spatial light modulation means for converting a polarization direction of the light from the light source may be provided between the light source and the optical recording medium.

According to this, for example, in the case where at the time of reproduction of information recorded on the optical recording medium, it is necessary to irradiate the preferably circularly polarized light, and at the time of recording of information on the optical recording medium, it is necessary to irradiate the preferably linearly polarized light having a polarization direction preferably corresponding to the information to be recorded, since the preferably circularly polarized light generation means and the spatial light modulation means are constructed of the one element, the optical pickup apparatus can be miniaturized.

In the invention, in the optical pickup apparatus of the above structure, the one element may be a polarization rotation element.

According to the polarization rotation element, the light from the light source can be changed into the preferably circularly polarized light by performing high-speed modulation, and can convert the polarization direction of the light from the light source by applying a voltage corresponding preferably to an objective polarization direction. Accordingly, the one element functioning as the circularly polarized light generation means and the spatial light modulation means can be realized.

In order to achieve the object, an optical reproducing method of the invention includes a step of preferably simultaneously extracting plural specified lights having a different polarization direction respectively in a separated state from light from an optical recording medium, and preferably simultaneously performing light amount measurement on each of the plural specified lights.

According to this, in order to reproduce information recorded on an optical recording medium, in the case where it is necessary to measure the light amount in each of the plural polarization directions with respect to the light from the optical recording medium, since the plural specified lights having the different polarization direction respectively are preferably simultaneously extracted in the separated state from the light from the optical recording medium, and the light amount measurement on each of the plural specified lights is preferably simultaneously performed, high speed reproduction becomes possible. Besides, since the ratio of light amounts is used, the fluctuation in the amount of reproducing light does not have an influence.

As described above, according to the invention, the optical pickup apparatus can be provided in which in the case where information recorded on the optical recording medium is reproduced by measuring the respective light amounts in the plural polarization directions with respect to the light from the optical recording medium, the reproduction can be performed at high S/N and at high speed. Besides, the optical reproducing method can be provided in which in the case where information recorded on the optical recording medium is reproduced by measuring the respective light amounts in the plural polarization directions with respect to the light from the optical recording medium, the reproduction can be performed at high S/N and at high speed.

### BRIEF DESCRIPTION OF THE DRAWINGS

Fig. 1 is an explanatory view showing a general structure of an optical pickup apparatus according to an embodiment of the invention.
Fig. 2 is a cross-sectional view showing a general layer structure of an optical recording medium according to an embodiment of the invention.
Fig. 3 is a view showing an absorption spectrum of DY7.
Fig. 4 is a view showing an absorption spectrum of DPVA and a fluorescence spectrum.
Fig. 5 is a view showing an absorption spectrum of C 153 and a fluorescence spectrum.
Fig. 6 is a view showing a relation between the polarization direction of an irradiated light and absorption intensity after irradiation of a recording light with respect to an optical recording medium containing DY7.
Fig. 7 is a view showing a vector distribution of the light amount of a reflected light from an optical recording medium in a case where a circularly polarized light is irradiated after irradiation of a recording light with respect to an optical recording medium containing DY7.
Fig. 8 is a view showing a relation between the polarization direction of an irradiated light and absorption intensity after irradiation of a recording light with respect to an optical recording medium containing DPVA.
Fig. 9 is a view showing a relation between the polarization direction of an irradiated light and absorption intensity after irradiation of a recording light with respect to an optical recording medium containing C153.
Fig. 10A is an explanatory view for explaining a case where a polarization direction is doubly recorded on an optical recording medium containing DPVA and is a view showing a vector distribution of light absorption intensity in the optical recording medium in a case where recording of a polarization direction has not been performed at all.
Fig. 10B is an explanatory view for explaining a case where a polarization direction is doubly recorded on an optical recording medium containing DPVA and is a view showing a vector distribution of light absorption intensity in the optical recording medium in a case where a linearly polarized light whose polarization direction is 90 degrees has been irradiated.
Fig. 10C is an explanatory view for explaining a case where a polarization direction is doubly recorded on an optical recording medium containing DPVA and is a view showing a vector distribution of light absorption intensity in the optical recording medium in a case where a linearly polarized light whose polarization direction is 0 degree has been irradiated.
Fig. 10D is an explanatory view for explaining a case where a polarization direction is doubly recorded on an optical recording medium containing DPVA and is a view showing a vector distribution of light absorption intensity in the optical recording medium in a case where a linearly polarized light whose polarization direction is 0 degree and a linearly polarized light whose polarization direction is 90 degrees have been sequentially irradiated.
Fig. 11 is a view showing a relation between the polarization direction of an irradiated light and fluorescence intensity after a recording light is irradiated with respect to an optical recording medium containing DPVA.
Fig. 12 is a view showing a vector distribution of the light amount of an emission light from an optical recording medium in a case where a circularly polarized light is irradiated after a recording light is irradiated with respect to an optical recording medium containing DPVA.
Fig. 13 is a view showing a relation between the polarization direction of an irradiated light and fluorescence intensity after a recording light is irradiated with respect to an optical recording medium containing C153.
Fig. 14 is a graph showing a relation between fluorescence anisotropy and concentration in DPVA.
Fig. 15 is a graph showing a relation between fluorescence anisotropy and concentration in C153.
Fig. 16 is a plan view showing a diffraction plane of a polarization hologram of an embodiment of the invention.

### DETAILED DESCRIPTION OF THE PREFERRED EMBODIMENTS

Embodiments of the invention will be described with reference to the drawings. Incidentally, the embodiments described here are merely examples, and the invention is not limited to the structure described here.

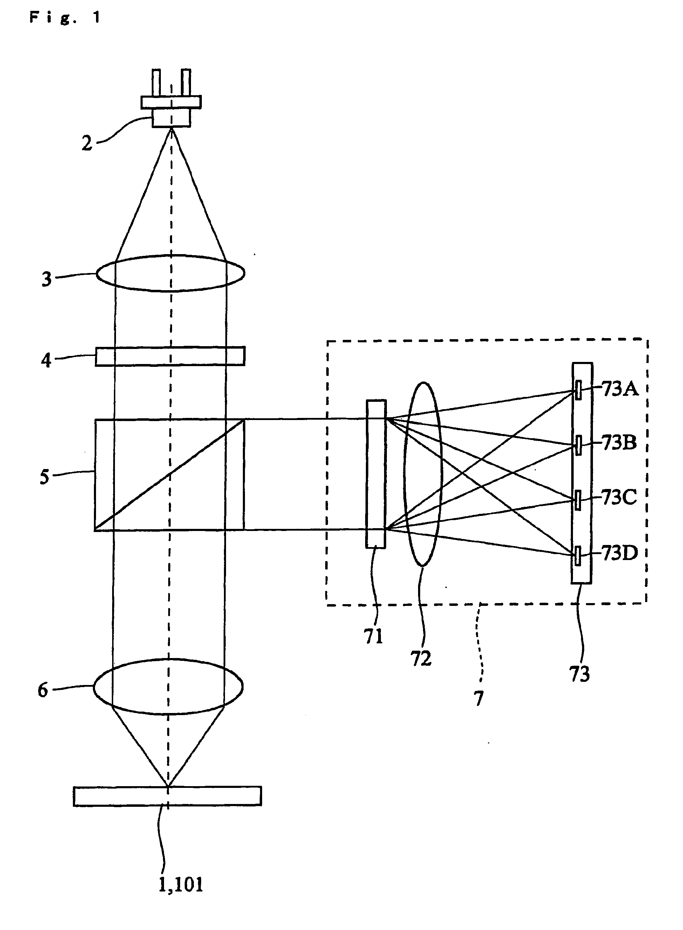

Fig. 1 is an explanatory view showing a rough structure of an optical pickup apparatus according to an embodiment. The optical pickup apparatus according to the embodiment can record and reproduce information on and from an optical recording medium 1 or an optical recording medium 101, and includes a laser light source 2, a collimating lens 3, a polarization control means 4, a separation element 5, an objective lens 6, and a detection unit 7.

Each of the optical recording media 1 and 101 can record the polarization direction of an irradiated recording light (linearly polarized light), and can perform multi-value recording corresponding to the number of patterns of the polarization direction used for recording. In the optical recording medium 1, the recorded polarization direction can be detected by observation of anisotropy of reflected light of irradiated reproducing light from the optical recording medium 1. In the optical recording medium 101, the recorded polarization direction can be detected by observation of anisotropy of emission light emitted from the optical recording medium 101 by irradiation of reproducing light. Incidentally, the details of the optical recording medium 1 and the optical recording medium 101 will be described later.

The laser light source 2 is a light source to emit a laser light of a linearly polarized light (in this embodiment, a semiconductor laser to emit a laser light of a wavelength of 408 nm band is used), and the collimating lens 3 converts the light emitted from the laser light source 2 into a parallel light. The polarization control means 4 functions as spatial light modulation means for converting a polarization direction in accordance with recorded multi-value information at the time of information recording, and functions as circularly polarized light generation means for converting the linearly polarized light from the collimating lens 3 into a circularly polarized light at the time of information reproduction.

Incidentally, although the details will be described later, the polarization control means 4 may be constructed of one element (for example, a polarization rotation element) functioning as both the spatial light modulation means and the circularly polarized light generation means, or may have such a structure that separate elements respectively constituting the spatial light modulation means and the circularly polarized light generation means are switched and inserted into an optical path according to the recording and reproduction of information. In the case where the polarization control means 4 is constructed of one element functioning as both the spatial light modulation means and the circularly polarized light generation means, the optical pickup apparatus can be miniaturized as compared with the structure in which the separate elements respectively constituting the spatial light modulation means and the circularly polarized light generation means are switched and inserted into the optical path according to the recording and reproduction of information.

Here, the one polarization rotation element functioning as both the spatial light modulation means and the circularly polarized light generation means is, for example, a magneto-optic spatial light modulator. The magneto-optic spatial light modulator can change the polarization direction of the linearly polarized light from the light source according to an applied voltage, and can also generate the circularly polarized light by performing high-speed modulation. As another example of the polarization rotation element as stated above, a PEM element can be named. Besides, a structure may be made such that for example, a liquid crystal display is used as the spatial light modulation means, a 1/4 wavelength plate is used as the circularly polarized light generation means, and these are switched and inserted into the optical path according to the recording and reproduction of information.

With respect to the separation element 5, different separation elements are selected in the optical recording medium 1 and the optical recording medium 101. Specifically, in the case of the optical recording medium 1, the separation element 5 allows the light from the polarization control means 4 to pass through and guides it to the optical recording medium 1, while reflects the reflected light from the optical recording medium 1 toward the direction of the detection unit 7. As an example of the separation element 5 as stated above, a half mirror, a prism or the like can be named.

On the other hand, in the case of the optical recording medium 101, the separation element 5 transmits light having a specific band including the wavelength of light from the polarization control means 4, that is, the wavelength of the light source and guides it to the optical recording medium 101, and when a reproducing light is irradiated, the separation element reflects light having a wavelength in a specified band including the wavelength of emission light (for example, fluorescence etc.) emitted from the optical recording medium 101. As an example of the separation element 5 as stated above, a dichroic mirror including a dielectric multi-layer film, a prism or the like can be named.

The objective lens 6 condenses the light from the separation element 5 on the optical recording medium 1, 101. The detection unit 7 receives the reflected light (reflected light of the reproducing light) from the optical recording medium 1 obtained through the separation element 5 or the emission light from the optical recording medium 101, measures a difference in the light amounts of the received light due to polarization directions, and detects the polarization direction recorded on the optical recording medium 1, 101. Incidentally, the details of the detection unit 7 will be described later.

A description will be given to a case where information is recorded on the optical recording medium 1, 101 by the optical pickup apparatus as stated above. The laser light of the linearly polarized light emitted from the laser light source 2 is made parallel by the collimating lens 3. Here, the polarization control means 4 at the time of recording of information functions as the spatial light modulation means, and by that, the polarization direction of the linearly polarized light incident from the collimating lens 3 is changed according to multi-value information to be recorded. The light is transmitted through the separation element 5 and is condensed on the optical recording medium 1, 101 by the objective lens 6. By this, the polarization direction is recorded on the optical recording medium 1, 101.

Next, a description will be given to a case where reproduction of the information of the optical recording medium 1 and the optical recording medium 101 is performed by the optical pickup apparatus. Since the optical recording medium 1 and the optical recording medium 101 are different from each other in the reproducing method of information, they will be separately described.

First, the case of the optical recording medium 1 will be described. The laser light emitted from the laser light source 2 is made parallel by the collimating lens 3. Here, the polarization control means 4 at the time of reproduction of information functions as the circularly polarized light generation means, and by this, the linearly polarized light incident from the collimating lens 3 is changed into the circularly polarized light.

The light is transmitted through the separation element 5 and is condensed on the optical recording medium 1 by the objective lens 6. Thereafter, the reproducing light is reflected by the optical recording medium 1, and comes out from the optical recording medium 1. This reflected light is reflected by the separation element 5 and is sent to the detection unit 7. The detection unit 7 measures a difference in the light amounts of the received light due to polarization directions and detects the polarization direction recorded on the optical recording medium 1.

Next, the case of the optical recording medium 101 will be described. The laser light emitted from the laser light source 2 is made parallel by the collimating lens 3. Here, the polarization control means 4 at the time of reproduction of information functions as the circularly polarized light generation means, and by this, the linearly polarized light incident from the collimating lens 3 is changed into the circularly polarized light.

The circularly polarized light is transmitted through the separation element 5 and is condensed on the optical recording medium 101 by the objective lens 6. Thereafter, the reproducing light is absorbed by the optical recording medium 101, and emission light is emitted thereby from the optical recording medium 101. Here, the emission spectrum shifts to the longer wavelength side than the absorption spectrum. Thus, only the emission light is reflected by the separation element 5 having wavelength selectivity, and is sent to the detection unit 7. The detection unit 7 measures a difference in the light amounts of the received light due to polarization directions, and detects the polarization direction recorded on the optical recording medium 101.

Incidentally, in the optical pickup apparatus described above, although the structure is such that the circularly polarized light is irradiated to the optical recording medium 1, 101 when information is reproduced, the invention is not necessarily limited to this structure, and a structure may be made such that for example, a linearly polarized light is irradiated to the optical recording medium 1, 101 while its direction is rotated.

Next, the details of the optical recording medium 1, 101 of the embodiment will be described in order of the optical recording medium 1 and the optical recording medium 101.

### (Optical recording medium 1)

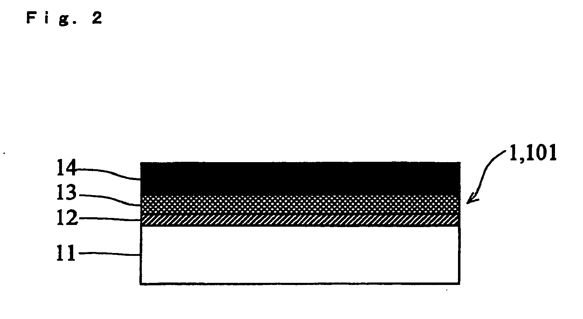

Fig. 2 is a sectional view showing a rough structure of the optical recording medium 1. The optical recording medium 1 includes a reflecting layer 12, a recording layer 13 and a protecting layer 14 sequentially laminated on a substrate 11.

The substrate 11 is a member for supporting the reflecting layer 12 and the recording layer 13 and is made of, for example, glass or resin. The reflecting layer 12 is a layer for reflecting a reproducing light at the time of reproduction. Incidentally, in this embodiment, although the structure is made to include the reflecting layer 12, the invention is not necessarily limited to this structure, and in the case of a structure in which the reproducing light is made to pass through and recorded information is detected, the structure may not include the reflecting layer 12. The protecting layer 14 is for preventing data loss due to a flaw or dust, and is provided to protect the recording layer 13. As a material forming the protecting layer 14, for example, transparent resin such as polycarbonate is used.

The recording layer 13 is a layer for recording the polarization direction of a recording light (linearly polarized light), and is made of a polymer film containing, as its main ingredient, a polymeric solid such as polymethyl methacrylate, polycarbonate, or polyvinyl alcohol. Incidentally, the recording layer 13 is not limited to the polymer film, and may be made of another material.

Although the film thickness of the recording layer 13 is not particularly limited, it is preferable that the thickness is 1 µm or less in view of the thickness of the optical recording medium 1. Besides, the lower limit of the film thickness of the recording layer 13 is preferably in a range in which the object of recording of information can be achieved and the formation is not difficult, and is preferably 50 nm or more.

A dye is dispersed in the recording layer 13 so that the polarization direction of the recording light of the linearly polarized light can be recorded. Here, the dye is a material which has a large transition dipole moment and in which light absorption occurs intensely. As the dye dispersed in the recording layer 13, there is selected such a dye that the dye absorbs light having a specific wavelength band, and when the dye is contained, in the case where a linearly polarized light having the specific wavelength band and an arbitrary polarization direction is irradiated to the recording layer 13, the optical recording medium exhibits anisotropy with respect to the light absorption intensity. When such a dye is dispersed in the recording layer 13, the recording of information can be made multi-value recording by the selection of the polarization direction of the recording light. Incidentally, the details of the principle based on which the multi-value recording is enabled will be described later.

Incidentally, in this embodiment, since its object is to provide the optical recording medium on which recording can be performed at high density, the dye is selected which has large light absorption in a 408 nm band of a wavelength used in a short wavelength light source of a current optical pickup. By this, the multi-value recording is realized using the light source by which high density recording can be realized, and the recording capacity of information can be increased.

Incidentally, as an index of indicating large light absorption at the wavelength of 408 nm, it is preferable that the molar extinction coefficient of the dye at the wavelength of 408 nm is 1.0 × 10⁴ dm³mol⁻¹cm⁻¹ or more.

Besides, in this embodiment, although the dye having large light absorption at the wavelength of 408 nm is used, the invention is not necessarily limited to this wavelength, and in the case where high density recording is taken into consideration, any wavelength may be adopted as long as the wavelength is in the range of 350 nm to 450 nm. The above range is adopted since in the case where a laser of a wavelength shorter than 350 nm is irradiated to the optical recording medium, light absorption occurs in a portion other than the recording layer 13, which is disadvantageous, and a structure in which light of a wavelength longer than 450 nm is irradiated is insufficient in improvement of information density.

The dye as described above exhibits large light absorption at the wavelength of 408 nm, and when the dye is contained, in the case where the linearly polarized light having the wavelength of 408 nm and an arbitrary polarization direction is irradiated to the recording layer 13, the optical recording medium exhibits the anisotropy with respect to the absorption intensity, and although such dye may be an inorganic dye, especially there are many such organic dyes. For example, such dye can be found from organic dyes such as azo dyes, anthracene dyes, coumarin dyes, cyanine dyes, acridine dyes, and stilbene dyes.

In the following, as examples, the optical recording medium 1 in which DY7 (Disperse Yellow 7, compound name 2-Methyl-4-[4-(phenylazo)phenylazo]phenol or 4-[4-(Phenylazo)phenylazo]-o-cresol) of the azo dye is dispersed in the recording layer 13, the optical recording medium 1 in which DPVA (compound name 9,10-bis(diphenylvinylenyl)-anthracene) of the anthracene dye is dispersed in the recording layer 13, and the optical recording medium 1 in which C153 (Coumarin 153, compound name 8-Trifluoromethyl-2,3,5,6-tetrahydro-1H, 4H-11-oxa-3a-aza-benzo[de]anthracen-10-one) of the coumarin dye is dispersed in the recording layer 13 are used, and the mechanism of recording and reproduction of the optical recording medium 1 of the embodiment will be described. Incidentally, the structural formulae of DY7, DPVA and C153 are shown in formulae (1), (2) and (3) in sequence.

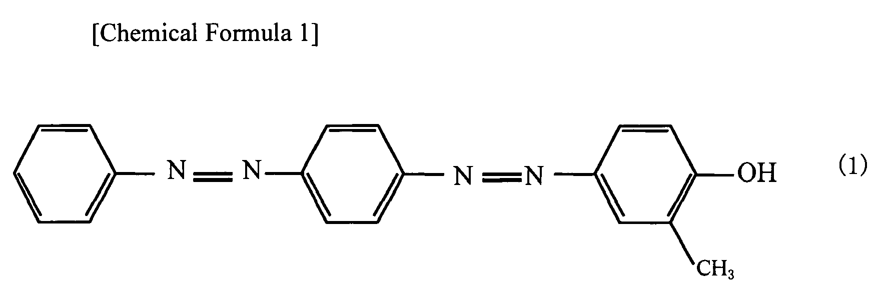

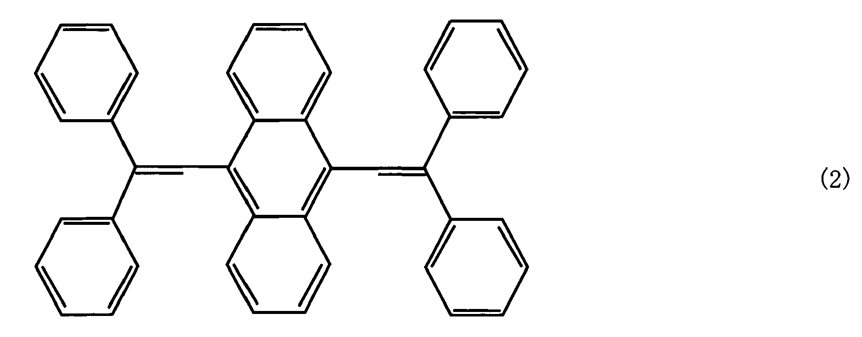

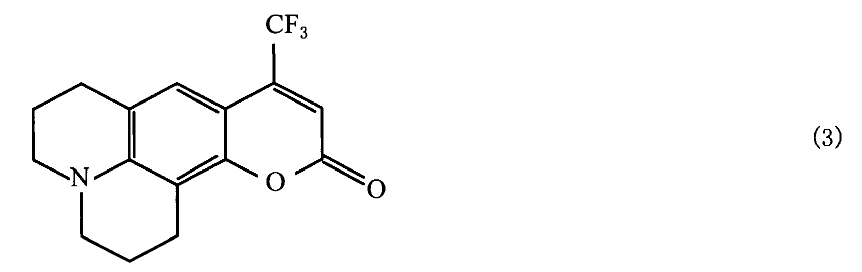

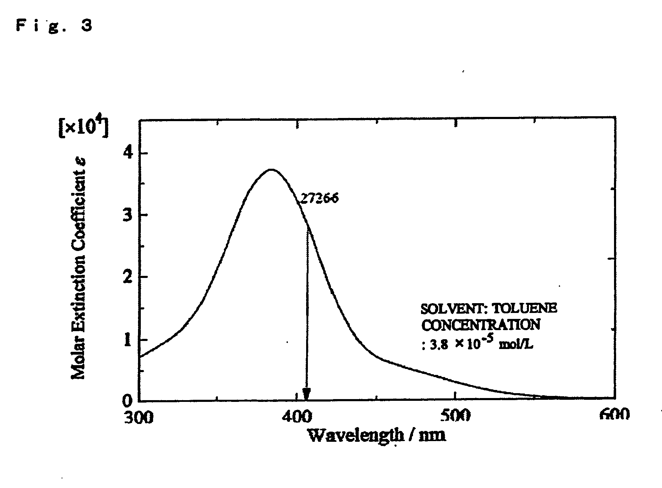

Incidentally, as shown in Fig. 3, Fig. 4 and Fig. 5, the molar extinction coefficients of DY7, DPVA and C153 at a wavelength of 408 nm are 2.7 × 10⁴ dm³mol⁻¹cm⁻¹, 1.4 × 10⁴ dm³mol⁻¹cm⁻¹, and 1.8 × 10⁴ dm³mol⁻¹cm⁻¹, respectively, and it is understood that they exhibit large light absorption at the wavelength of 408 nm (having large transition dipole moment). In Fig. 3, Fig. 4 and Fig. 5, the horizontal axis indicates the wavelength (unit is nm), and the vertical axis indicates the molar extinction coefficient (unit is dm³mol⁻¹cm⁻¹). Besides, with respect to all the dyes, toluene is used as the solvent.

### (Dye: DY7)

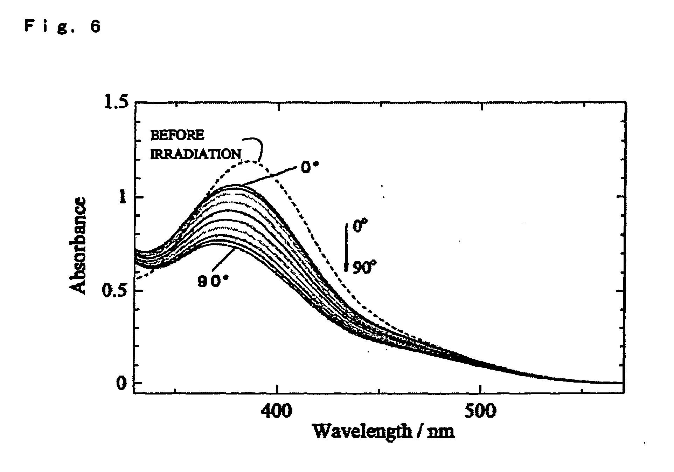

First, the optical recording medium 1 in which DY7 is contained in the recording layer 13 will be described. Fig. 6 is a view showing a relation between the polarization direction of irradiated light and absorption intensity after a linearly polarized light (wavelength of 408 nm) whose polarization direction is made 90 degrees by the polarization control means 4 (referring to Fig. 1) is irradiated to the recording layer as a recording light. In the drawing, the horizontal axis indicates the wavelength (unit is nm) and the vertical axis indicates the absorbance (log₁₀(I₀/I): I₀ is the amount of incident light, I is the amount of transmitted light), and the polarization direction is changed at intervals of 15 degrees in the range of from 0 degree to 90 degrees. Incidentally, a spectrum indicated by a broken line is an absorption spectrum obtained in the case where a linearly polarized light having an arbitrary polarization is irradiated before the linearly polarized light as the recording light is irradiated. Besides, the recording layer 13 is formed by doping polymethyl methacrylate with DY7, the concentration of DY7 with respect to polymethyl methacrylate is 1.0 × 10⁻¹ M, and the thickness of the recording layer 13 is 2.4 µm.

From FIG. 6, before the irradiation of the linearly polarized light, there is no difference in the absorption intensity due to the difference of the polarization direction, and the common absorption spectrum is obtained with respect to all polarization directions. However, by the irradiation of the linearly polarized light, as the polarization direction increases from 0 degree to 90 degrees, the light absorption intensity is decreased, and the anisotropy occurs in the light absorption intensity. It appears that this is because when the recording light of the linearly polarized light having the polarization direction of 90 degrees is irradiated to the recording layer 13 from the laser light source 2, there occurs disappearance (this appears to be caused by isomerization) of the transition dipole moments of DY7 molecules having orientations corresponding to the polarization direction of 90 degrees, and the spatial distribution of the transition dipole moment is changed.

From this, the polarization direction can be recorded as multi-value information on the optical recording medium 1 by selection of the polarization direction of the linearly polarized light from the laser light source 2, which is irradiated as the recording light. Then, by this, the multi-value recording can be realized.

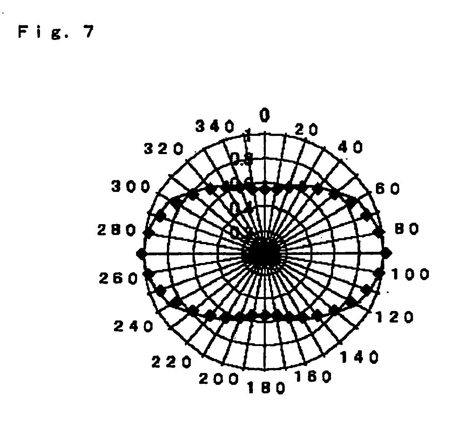

Next, a description will be given to a case where the recorded polarization direction is detected by using the reflected light (reflected light of the reproducing light) from the optical recording medium 1. When the reproducing light which has been made the circularly polarized light by the polarization control means 4 is irradiated to the optical recording medium 1, the light amount of the reflected light from the optical recording medium 1 varies according to the polarization direction because of the anisotropy of the absorption intensity of the optical recording medium 1. For example, in the case where the polarization direction of 90 degrees is recorded, the vector distribution with respect to the light amount of the reflected light from the optical recording medium 1 is as shown in Fig. 7.

Incidentally, in Fig. 7, outside numerals of the circular coordinates indicate polarization directions. The polar coordinate form is adopted in which a distance from the center point of the circular coordinates of the graph in each of the polarization directions indicates the amount of the light having the polarization direction component. Also here, the recording layer 13 is formed by doping polymethyl methacrylate with DY7, the concentration of DY7 with respect to polymethyl methacrylate is 1.0 × 10⁻¹ M, and the thickness of the recording layer 13 is 2.4 µm. The light from the laser light source 2 has a wavelength of 408 nm and an irradiation intensity of 830 mWcm⁻²

As shown in Fig. 7, the recorded polarization direction (here, 90 degrees) and the other polarization direction are different from each other in the amount of reflected light. Thus, in the detection unit 7 to detect the reflected light from the optical recording medium 1, the light amount of the reflected light from the optical recording medium 1 is measured in each of plural specified polarization directions, and when the ratio of the obtained light amounts is obtained, the polarization direction recorded on the optical recording medium 1 can be detected. That is, by this principle, the reproduction of multi-value recorded information becomes possible. Incidentally, the details of the reproduction will be described later.

### (Dye: DPVA)

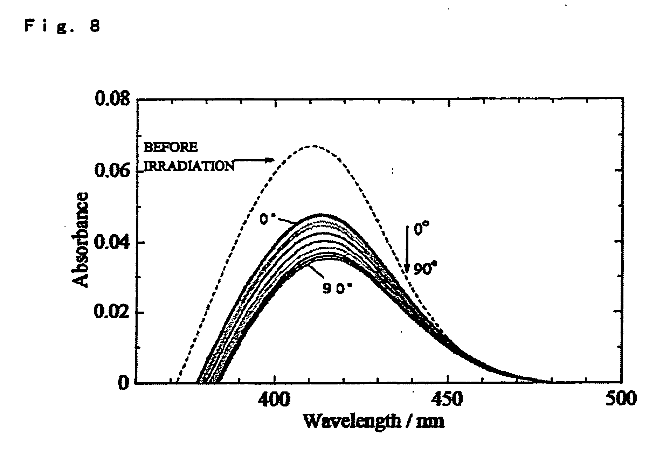

Next, a description will be given to a case where DPVA is contained in the recording layer 13. Fig. 8 is a view showing a relation between the polarization direction of an irradiated light and absorption intensity after a linearly polarized light whose polarization direction is made 90 degrees by the polarization control means 4 has been irradiated to the recording layer as a recording light. Here, the polarization direction is changed at intervals of 15 degrees in the range of from 0 degree to 90 degrees. In the figure, the horizontal axis and the vertical axis are the same as those of Fig. 6. Incidentally, a spectrum indicated by a broken line is an absorption spectrum obtained in the case where a linearly polarized light having an arbitrary polarization direction is irradiated before the linearly polarized light as the recording light is irradiated. Besides, the recording layer 13 is formed by doping polymethyl methacrylate with DPVA, the concentration of DPVA with respect to polymethyl methacrylate is 1.0 × 10⁻³ M, and the thickness of the recording layer 13 is 30 µm.

From Fig. 8, similarly to the case where DY7 is contained as the dye, before the irradiation of the linearly polarized light, there is no difference in the absorption intensity due to the difference of the polarization direction, and a common spectrum is obtained for all polarization directions. However, by the irradiation of the linearly polarized light, as the polarization direction is increased from 0 degree to 90 degrees, the light absorption intensity is decreased, and it is understood that anisotropy occurs in the light absorption intensity. It appears that this is because when the recording light of the linearly polarized light having the polarization direction of 90 degrees is irradiated to the recording layer 13 from the laser light source 2, there occurs disappearance (here, although this appears to be caused by, for example, decomposition of a molecule, oxidization or the like, the details are not clear) of the transition dipole moments of DPVA molecules having orientations corresponding to the polarization direction of 90 degrees, and the spatial distribution of the transition dipole moment is changed.

From this, also in the case where DPVA is contained as the dye, similarly to the case where DY7 is contained as the dye, by the selection of the polarization direction of the linearly polarized light from the laser light source 2, which is irradiated as the recording light, the polarization direction can be recorded as multi-value information on the optical recording medium 1. Then, by this, multi-value recording can be realized.

A method of detecting the recorded polarization direction by using the reflected light (reflected light of the reproducing light) from the optical recording medium 1 is performed similarly to the case where DY7 is contained as the dye.

### (Dye: C153)

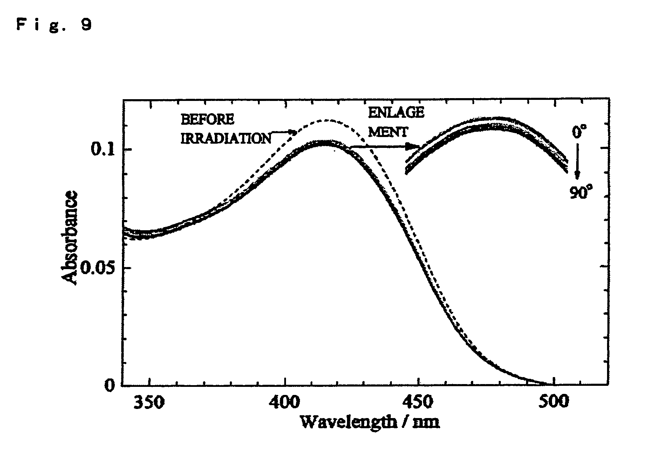

Next, a description will be given to the case where C153 is contained in the recording layer 13. Fig. 9 is a view showing a relation between the polarization direction of irradiated light and absorption intensity after the linearly polarized light whose polarization direction is made 90 degrees by the polarization control means 4 is irradiated as the recording light to the recording layer 13. Here, the polarization direction is changed at intervals of 15 degrees in the range of from 0 degree to 90 degrees. In the figure, the horizontal axis and the vertical axis are the same as those of Fig. 6. Incidentally, a spectrum indicated by a broken line is an absorption spectrum obtained in the case where a linearly polarized light having an arbitrary polarization direction is irradiated before the linearly polarized light as the recording light is irradiated. Besides, the recording layer 13 is formed by doping polymethyl methacrylate with C153, the concentration of C153 with respect to polymethyl methacrylate is 1.0 × 10⁻³ M, and the film thickness is 30 µm.

From Fig. 9, similarly to the case where DY7 or DPVA is contained as the dye, before the irradiation of the linearly polarized light, there is no difference in the absorption intensity due to the difference of the polarization direction, and a common absorption spectrum is obtained for all polarization directions. However, by the irradiation of the linearly polarized light, as the polarization direction is increased from 0 degree to 90 degrees, the light absorption intensity is decreased, and it is understood that anisotropy occurs in the light absorption intensity. It appears that this is because when the recording light of the linearly polarized light having the polarization direction of 90 degrees is irradiated to the recording layer 13 from the laser light source 2, there occurs disappearance (here, although this appears to be caused by, for example, decomposition of a molecule, oxidization or the like, the details are not clear) of the transition dipole moments of C153 molecules having orientations corresponding to the polarization direction of 90 degrees, and the spatial distribution of the transition dipole moment is changed.

From this, also with respect to the case where C 153 is contained as the dye, similarly to the case where DY7 or DPVA is contained as the dye, the polarization direction can be recorded as multi-value information on the optical recording medium 1 by the selection of the polarization direction of the linearly polarized light from the laser light source 2, which is irradiated as the recording light. By this, multi-value recording can be realized.

A method of detecting the recorded polarization direction by using the reflected light (reflected light of the reproducing light) from the optical recording medium 1 is performed similarly to the case where DY7 is contained as the dye.

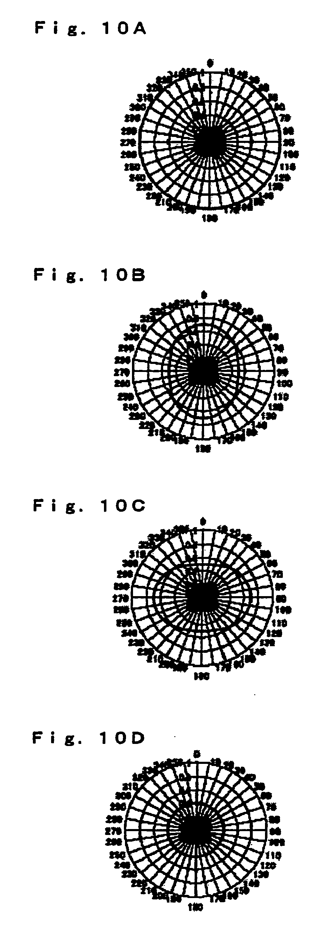

In the above, although the description has been given to the method in which with respect to the optical recording medium 1 containing DY7, DPVA or C 153 as the dye in the recording layer 13, the linearly polarized light having one kind of polarization direction is irradiated to one place and the recording of the polarization direction is performed, it is also possible to perform multiple recording of polarization directions by overlappingly irradiating one place with plural linearly polarized lights having different polarization directions. With respect to this point, a case where DPVA is contained as the dye will be described with reference to Fig. 10A to Fig. 10D while double recording is used as an example.

Incidentally, in Fig. 10A to Fig. 10D, outside numerals of the circular coordinates indicate polarization directions. The polar coordinate form is adopted in which a distance from the center point of the circular coordinates of the graph in each of the polarization directions indicates the absorption intensity of the light having the polarization direction component by the optical recording medium 1.

Fig. 10A shows a vector distribution of light absorption intensity of the optical recording medium 1 in which recording of the polarization direction has not been performed at all. Since the recording of the polarization direction has not been performed at all, there is no difference in the light absorption intensity due to the difference in the polarization direction of irradiated light, and the absorption intensity becomes 1.

Fig. 10B shows a vector distribution of light absorption intensity of the optical recording medium 1 in the case where a linearly polarized light whose wavelength is 408 nm and whose polarization direction is made 90 degrees by the polarization control means 4 is irradiated from the laser light source 2 to the optical recording medium 1 in which recording of the polarization direction has not been performed at all. In this case, the elliptical vector distribution is obtained in which the absorption intensity of the light having the polarization direction of 90 degrees, in which the polarization recording has been performed, is minimum and the absorption intensity in the polarization direction of 0 degree is maximum.

Fig. 10C shows a vector distribution of light absorption intensity of the optical recording medium 1 in the case where a linearly polarized light whose wavelength is 408 nm and whose polarization direction is made 0 degree by the polarization control means 4 is irradiated from the laser light source 2 to the optical recording medium 1 in which recording of the polarization direction has not been performed at all. In this case, the elliptical vector distribution is obtained in which the absorption intensity of the light having the polarization direction of 0 degree, in which the polarization recording has been performed, is minimum and the absorption intensity in the polarization direction of 90 degrees is maximum.

Fig. 10D shows a vector distribution of light absorption intensity of the optical recording medium 1 in the case where a linearly polarized light whose wavelength is 408 nm and whose polarization direction is made 90 degrees by the polarization control means 4 is irradiated from the laser light source 2 to the optical recording medium 1 in which recording of the polarization direction has not been performed at all, and then, a linearly polarized light whose wavelength is 408 nm and whose polarization direction is made 0 degree by the polarization control means 4 is further irradiated from the laser light source 2 to the optical recording medium. In this case, although the difference of the light absorption intensity due to the difference of the polarization direction becomes small, the absorption intensity becomes a small value which is about 0.4 as compared with that before the irradiation.

As described above, the vector distribution of the light absorption intensity of the optical recording medium 1 is clearly different among all of the non-recorded state (Fig. 10A), the state (Fig. 10B) in which only the polarization direction of 90 degrees is recorded, the state (Fig. 10C) in which only the polarization direction of 0 degree is recorded, and the state (Fig. 10D) in which double recording of the polarization direction of 90 degrees and the polarization direction of 0 degree is performed. Accordingly, also in the case where the polarization direction is doubly recorded, its detection becomes possible, and the usability of the double recording in the optical recording medium 1 of the invention is admitted.

Incidentally, in the results shown in Fig. 10A to Fig. 10D, the recording layer 13 is formed by doping polymethyl methacrylate with DPVA, the concentration of DPVA with respect to polymethyl methacrylate is 1.0 × 10⁻³ M, and the thickness of the recording layer 13 is 30 µm.

Besides, in the optical recording medium 1 described above, although the structure in which the recording layer 13 contains DY7, DPVA or C153 has been described, as described before, another dye may be used as long as the dye exhibits large light absorption at the wavelength of 408 nm, and when the dye is contained, in the case where the linearly polarized light having the wavelength of 408 nm and an arbitrary polarization direction is irradiated to the recording layer 13, the optical recording medium exhibits anisotropy in the light absorption intensity.

Besides, although the concentration of the dye contained in the recording layer 13 (the concentration with respect to a main ingredient constituting the recording layer 13, for example, the concentration with respect to polymethyl methacrylate) is not particularly limited, since the anisotropy in the light absorption intensity is generated by using the dye, it is preferable that the concentration is as high as possible. As stated above, in view of the point that the thickness of the recording layer 13 included in the optical recording medium 1 is preferably 1 µm or less, it is preferable that the concentration of the dye contained in the recording layer 13 is 0.1 M or more. The upper limit of the concentration is not particularly limited as long as the dye can be uniformly dispersed in the polymer film.

### (Optical recording medium 101)

Next, the optical recording medium 101 will be described. Incidentally, with respect to portions overlapping with those of the optical recording medium 1, their description will be omitted in case there is particularly no need.

The basic structure of the optical recording medium 101 is the same as the optical recording medium 1 shown in Fig. 2, and a reflecting layer 12, a recording layer 13 and a protecting layer 14 are sequentially laminated on a substrate 11.

The optical recording medium 101 is different from the optical recording medium 1 in a dye contained in the recording layer 13. That is, as the dye contained in the recording layer 13 of the optical recording medium 101, there is selected such a dye that the dye absorbs light having a specific wavelength band, and when the dye is contained, in the case where a linearly polarized light having the specific wavelength band and an arbitrary polarization direction is irradiated to the recording layer 13, the optical recording medium exhibits anisotropy in emission intensity. When such a dye is dispersed in the recording layer 13, recording of information can be made multi-value recording by selection of the polarization direction of a recording light. Incidentally, the details of the principle based on which the multi-value recording is enabled will be described later.

Incidentally, similarly to the case of the optical recording medium 1, from the viewpoint of the optical recording medium on which recording can be made at high density, the optical recording medium 101 is made the optical recording medium containing the dye exhibiting large light absorption at the wavelength of 408 nm band. However, as described before, the invention is not limited to the case of the dye exhibiting large light absorption with respect to the light having the wavelength of 408 nm band. Besides, from the viewpoint of high density recording, it is preferable that the dye having a large transition dipole moment in the range of 350 nm to 450 nm is contained in the optical recording medium.

Besides, as an index of indicating large light absorption at the wavelength of 408 nm, it is preferable that the molar extinction coefficient of the dye at the wavelength of 408 nm is 1.0 × 10⁴ dm³mol⁻¹cm⁻¹ or more.

The dye as described above exhibits large light absorption at the wavelength of 408 nm, and when the dye is contained, in the case where the linearly polarized light having the specific wavelength band and an arbitrary polarization direction is irradiated to the recording layer 13, the optical recording medium exhibits the anisotropy in the emission intensity, and although such dye may be an inorganic dye, especially there are many such organic dyes. For example, such dye can be found from organic dyes such as azo dyes, anthracene dyes, coumarin dyes, cyanine dyes, acridine dyes, and stilbene dyes.

In the following, as examples, the optical recording medium 101 in which DPVA (compound name 9,10-bis(diphenylvinylenyl)-anthracene) of the anthracene dye is dispersed in the recording layer 13, and the optical recording medium 101 in which C153 (Coumarin 153, compound name 8-Trifluoromethyl-2,3,5,6-tetrahydro-1H, 4H-11-oxa-3a-aza-benzo[de]anthracen-10-one) of the coumarin dye is dispersed in the recording layer 13 are used, and the mechanism of recording and reproduction of the optical recording medium 101 of the embodiment will be described.

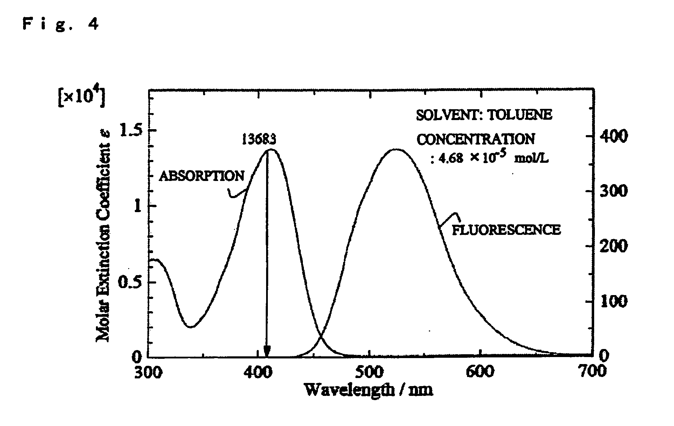

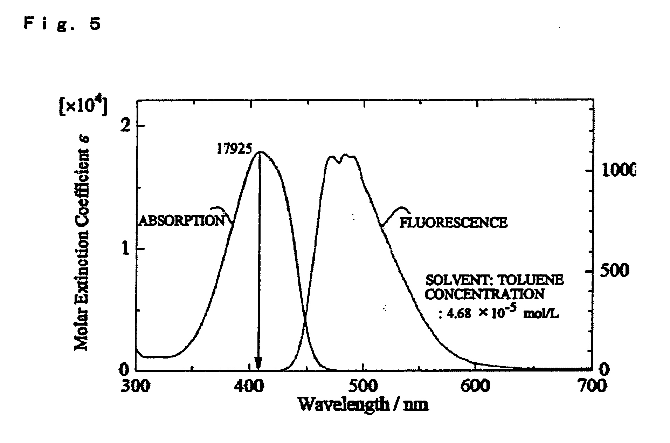

Incidentally, as shown in Fig. 4 and Fig. 5, the molar extinction coefficients of DPVA and C 153 at the wavelength of 408 nm are 1.4 × 10⁴ dm³mol⁻¹cm⁻¹ and 1.8 × 10⁴ dm³mol⁻¹cm⁻¹, respectively, and it is understood that they exhibit large light absorptions at the wavelength of 408 nm (having large transition dipole moments). A fluorescence spectrum is observed in both the materials, and it is understood that they are fluorescence molecules. In Fig. 4 and Fig. 5, the horizontal axis indicates the wavelength (unit is nm), the vertical axis at the left side of the figure indicates the molar extinction coefficient (unit is dm³mol⁻¹cm⁻¹), and the vertical axis at the right side indicates the fluorescence intensity.

### (Dye: DPVA)

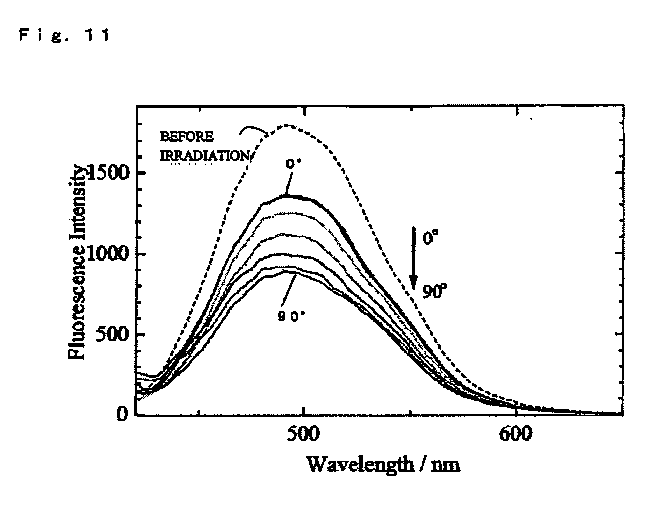

First, a description will be given to the optical recording medium 101 in which DPVA is contained in the recording layer 13. Fig. 11 is a view showing a relation between the polarization direction of irradiated light and emission intensity (fluorescence intensity in this embodiment) after the linearly polarized light (wavelength of 408 nm) whose polarization direction is made 90 degrees by the polarization control means 4 is irradiated as the recording light to the recording layer 13. Here, the polarization direction is changed at intervals of 15 degrees in the range of from 0 degree to 90 degrees. In the figure, the horizontal axis indicates the wavelength (unit is nm) and the vertical axis indicates the fluorescence intensity (relative value). Incidentally, a spectrum indicated by a broken line is a fluorescence spectrum obtained in the case where a linearly polarized light having an arbitrary polarization direction is irradiated before the irradiation of the linearly polarized light as the recording light. Also here, the recording layer 13 is formed by doping polymethyl methacrylate with DPVA, the concentration of DPVA with respect to polymethyl methacrylate is 1.0 × 10⁻³ M, and the thickness of the recording layer 13 is 30 µm.

From Fig. 11, before the irradiation of the linearly polarized light, there is no difference in the fluorescence intensity due to the difference in the polarization direction, and a common fluorescence spectrum is obtained for all polarization directions. However, by the irradiation of the linearly polarized light, as the polarization direction is increased from 0 degree to 90 degrees, the fluorescence intensity is decreased, and anisotropy occurs in the fluorescence intensity. It appears that this is because when the recording light of the linearly polarized light having the polarization direction of 90 degrees is irradiated to the recording layer 13 from the laser light source 2, there occurs disappearance (here, although this appears to be caused from, for example, decomposition of a molecule, oxidization or the like, the details are not clear) of the transition dipole moments of DPVA molecules having orientations corresponding to the polarization direction of 90 degrees, and the spatial distribution of the transition dipole moment is changed.

From this, the polarization direction can be recorded as multi-value information on the optical recording medium 101 by selection of the polarization direction of the linearly polarized light from the laser light source 2, which is irradiated as the recording light. Then, by this, multi-value recording can be realized.

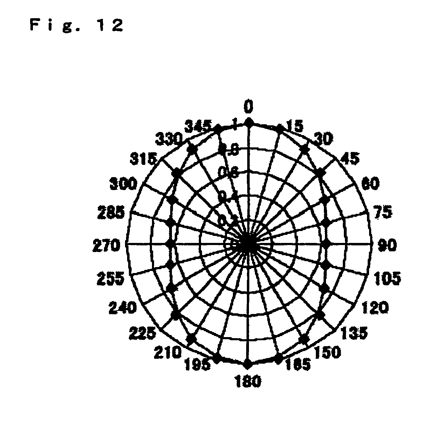

Next, a description will be given to the case where the recorded polarization direction is detected by using the fluorescence emitted from the optical recording medium 101 by the irradiation of a reproducing light to the optical recording medium 101. When the reproducing light which has been made the circularly polarized light by the polarization control means 4 is irradiated to the optical recording medium 101, the light amount of the fluorescence emitted from the optical recording medium 101 varies according to the polarization direction because of the anisotropy in the fluorescence intensity of the optical recording medium 101. For example, in the case where the polarization direction of 90 degrees is recorded, the vector distribution of the light amount of the fluorescence emitted from the optical recording medium 1 is as shown in Fig. 12.

Incidentally, in Fig. 12, outside numerals of the circular coordinates indicate polarization directions. The polar coordinate form is adopted in which a distance from the center point of the circular coordinates of the graph in each of the polarization directions indicates the amount of the light having the polarization direction component. Also here, the recording layer 13 is formed by doping polymethyl methacrylate with DPVA, the concentration of DPVA with respect to polymethyl methacrylate is 1.0 × 10⁻³ M, and the thickness of the recording layer 13 is 30 µm. Incidentally, the light from the laser light source 2 has a wavelength of 408 nm and an irradiation intensity of 830 mWcm⁻².

As shown in Fig. 12, the recorded polarization direction (here, 90 degrees) and the other polarization direction are different from each other in the amount of fluorescence. Thus, in the detection unit 7 to detect the emission light (fluorescence in this embodiment) from the optical recording medium 101, the light amount of the fluorescence emitted from the optical recording medium 101 is measured in each of plural specified polarization directions, and when the ratio of the obtained light amounts is obtained, the polarization direction recorded on the optical recording medium 101 can be detected. That is, by this principle, reproduction of multi-value recorded information becomes possible. Incidentally, the details of reproduction will be described later.

### (Dye: C153)

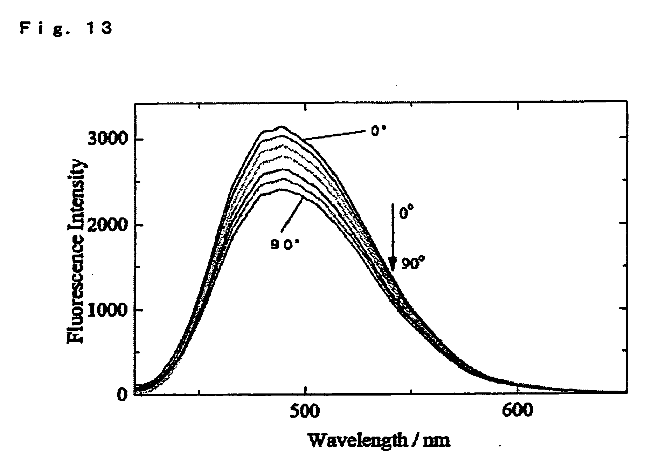

Fig. 13 is a view showing a relation between the polarization direction of irradiated light and emission intensity (fluorescence intensity in this embodiment) after a linearly polarized light (wavelength of 408 nm) whose polarization direction is made 90 degrees by the polarization control means 4 is irradiated as a recording light to the recording layer 13. Here, the polarization direction is changed at intervals of 15 degrees in the range of from 0 degree to 90 degrees. In the figure, the horizontal axis indicates the wavelength (unit is nm) and the vertical axis indicates the fluorescence intensity (relative value). Incidentally, a spectrum indicated by a broken line is a fluorescence spectrum obtained in the case where a linearly polarized light having an arbitrary polarization direction is irradiated before the irradiation of the linearly polarized light as the recording light. Also here, the recording layer 13 is formed by doping polymethyl methacrylate with C153, the concentration of C153 with respect to polymethyl methacrylate is 1.0 × 10⁻³ M, and the thickness of the recording layer 13 is 30 µm.

From Fig. 13, similarly to the case where DPVA is contained as the dye, before the irradiation of the linearly polarized light, there is no difference in the fluorescence intensity due to the difference in the polarization direction, and a common fluorescence spectrum is obtained for all polarization directions. However, by the irradiation of the linearly polarized light, as the polarization direction is increased from 0 degree to 90 degrees, the fluorescence intensity is decreased, and anisotropy occurs in the fluorescence intensity. It appears that this is because when the recording light of the linearly polarized light having the polarization direction of 90 degrees is irradiated to the recording layer 13 from the laser light source 2, there occurs disappearance (here, although this appears to be caused from, for example, decomposition of a molecule, oxidization or the like, the details are not clear) of the transition dipole moments of C 153 molecules having orientations corresponding to the polarization direction of 90 degrees, and the spatial distribution of the transition dipole moment is changed.

From this, the polarization direction can be recorded as multi-value information on the optical recording medium 101 by selection of the polarization direction of the linearly polarized light from the laser light source 2, which is irradiated as the recording light. Then, by this, multi-value recording can be realized. Incidentally, similarly to the case where DPVA is contained as the dye, the recorded polarization direction can be detected.

In the above, although the description has been given to the method in which the linearly polarized light having one kind of polarization direction is irradiated to one place and recording of information is performed, similarly to the first embodiment, it is also possible to perform multiple recording of polarization directions by overlappingly irradiating one place with plural linearly polarized lights having different polarization directions.

Besides, in the optical recording medium 101, although the structure in which the recording layer 13 contains DPVA or C153 has been described, as described before, another dye may be used as long as the dye exhibits large light absorption at the wavelength of 408 nm, and when the dye is contained, in the case where the linearly polarized light having the wavelength of 408 nm and an arbitrary polarization direction is irradiated to the recording layer 13, the optical recording medium exhibits anisotropy in the emission intensity.

Besides, although the concentration of the dye contained in the recording layer 13 (the concentration with respect to a main ingredient constituting the recording layer 13, for example, the concentration with respect to polymethyl methacrylate) is not particularly limited, when the concentration of the dye becomes high, excitation energy transfers from a molecule to another molecule, that is, the so-called fluorescence energy transfer occurs, and therefore, it is preferable that the concentration of the dye is not made excessively high.

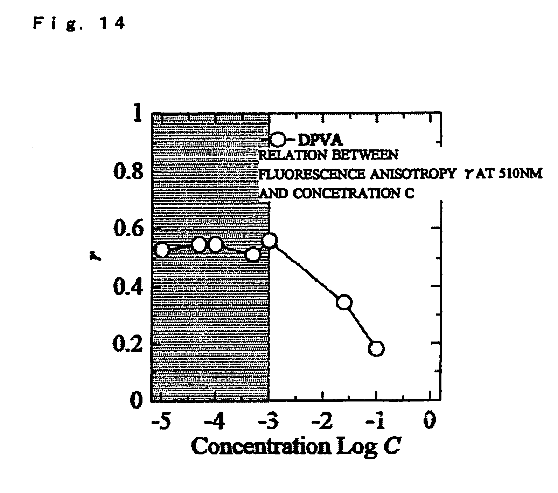

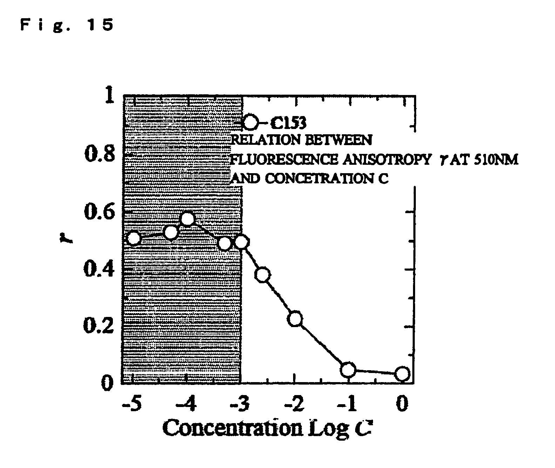

In this point, with respect to DPVA and C153, evaluation results of concentration dependency of fluorescence anisotropy are shown in Fig. 14 and Fig. 15. The figures are graphs each showing a relation between fluorescence anisotropy γ at a wavelength of 510 nm and dye concentration C. In view of the results, the dye concentration is preferably 10⁻² M or less, and is more preferably 10⁻³ M or less. Incidentally, the lower limit of the concentration is determined by the detectable level on the detection side, and is preferably 10⁻⁶ M or more.

### (Details of the detection unit 7 of the optical pickup apparatus)

A description will be given to the details of the detection unit 7 of the embodiment, which is used in the case where the optical recording medium 1, 101 as described above is reproduced. As shown in Fig. 1, the detection unit 7 includes a polarization hologram 71, a detection lens 72 and a light amount measurement device 73.

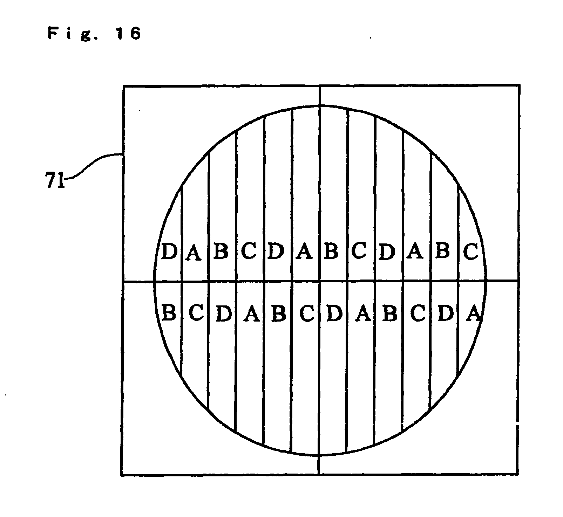

The polarization hologram 71 causes a light having a specified polarization direction among incident lights to diffract, and extracts it in a separate state. Here, Fig. 16 is a plan view in which the polarization hologram 71 is seen from the diffraction plane side. The polarization hologram 71 includes plural stripe-shaped diffraction regions disposed in parallel to each other. In more detail, the respective diffraction regions of the polarization hologram 71 include four kinds of diffraction regions A to D. These four kinds of diffraction regions A to D correspond to respective regions formed by dividing the whole diffraction plane (circular region) of the polarization hologram 71 into upper and lower two stages, and further dividing this equally in the lateral direction.

Incidentally, the structure of the polarization hologram 71 is not limited to the structure of this embodiment. For example, the structure of the upper and lower two stages may not be adopted.

Besides, the detection lens 72 condenses lights diffracted in the respective diffraction regions of the polarization hologram 71 to the specified positions of the light amount measurement device 73. The light amount measurement device 73 includes condensing sections 73A to 73D to receive the lights diffracted by the respective diffraction regions A to D of the polarization hologram 71 through the detection lens 72. That is, the respective diffraction regions A to D of the polarization hologram 71 are in one-to-one correspondence with the respective condensing sections 73A to 73D of the light amount measurement device 73, and for example, the light diffracted in the diffraction region A is received by the condensing section 73A.

Here, for example, the light condensed on the condensing section 73A corresponds to the polarized light of the polarization direction of 0 degree, the light condensed on the condensing section 73B corresponds to the polarized light of the polarization direction of 45 degrees, the light condensed on the condensing section 73C corresponds to the polarized light of the polarization direction of 90 degrees, and the light condensed on the condensing section 73D corresponds to the polarized light of the polarization direction of 135 degrees. According to such structure, when the light amounts of the lights condensed on the condensing sections 73A, 73B, 73C and 73D of the light amount measurement device 73 are respectively measured, the light amounts of the components of the polarization direction of 0 degree, the polarization direction of 45 degrees, the polarization direction of 90 degrees, and the polarization direction of 135 degrees of the reflected light or the emission light from the optical recording medium 1 can be known.

Then, the recorded polarization direction can be detected from the measured light amounts of the components of the polarization direction of 0 degree, the polarization direction of 45 degrees, the polarization direction of 90 degrees, and the polarization direction of 135 degrees of the reflected light of the reproducing light from the optical recording medium 1 or the emission light emitted from the optical recording medium 101.

Hereinafter, first, a description will be given, by use of an example, to a detection method of a polarization direction recorded on the optical recording medium 1 in the case where a reproducing light (circularly polarized light) is irradiated to the optical recording medium 1 in which anisotropy in light absorption intensity occurs according to the polarization direction of a recording light of a linearly polarized light, and the reflected light of the reproducing light from the optical recording medium 1 is sent to the detection unit 7 through the separation element 5.

In this example, the polarization direction patterns used for recording are four patterns (four-value modulation) of 0 degree, 45 degrees, 90 degrees, and 135 degrees similarly to the polarization directions in which the light amount is measured by the light amount measurement device 73, and the detection in the case where the polarization direction of 90 degrees among them is recorded will be considered. Incidentally, the recording layer 13 is formed by doping polymethyl methacrylate with DY7, the concentration of DY7 with respect to polymethyl methacrylate is 1.0 × 10⁻¹M, and the thickness of the recording layer 13 is 2.4 µm.

At this time, the reproducing light (circularly polarized light) is irradiated to the optical recording medium 1, and when the reflected light of the reproducing light from the reflecting layer 12 is sent to the detection unit 7 through the separation unit 5, from Fig. 7, the ratio of the light amounts measured at the condensing sections 73A, 73B, 73C and 73D is almost 0.55:0.75:1:0.75. Thus, it is detected that the recorded polarization direction is 90 degrees corresponding to the condensing section 73C at which the light amount is largest.

In this example, the reproducing light (circularly polarized light) is irradiated to the optical recording medium 1, and in the case where the reflected light of the reproducing light from the optical recording medium 1 is sent to the detection unit 7 through the separation element 5, the number of the diffraction region patterns (four of A to D) of the polarization hologram 71 is equal to the number of the polarization direction patterns (four patterns of 0 degree, 45 degrees, 90 degrees, and 135 degrees) used for recording. The polarization direction of light condensed on each condensing section is made the same as the polarization direction of light used for recording. In this case, in the reflected light of the reproducing light from the optical recording medium 1, the light amount of the condensing section corresponding to the recorded polarization direction becomes maximum. Accordingly, by using this, the recorded polarization direction can be detected.

Besides, also in the case where the number of polarization direction patterns used for recording is different from the number of diffraction region patterns of the polarization hologram 71, the polarization direction recorded on the optical recording medium 1 can be detected. In this case, various calculations are performed from the light amounts of lights condensed on the respective condensing sections, and with respect to the reflected light from the optical recording medium 1, the polarization direction in which the light amount is largest is detected. Thus, it is necessary to pay attention to the fact that as the number of polarization direction patterns used for recording becomes large, the S/N is decreased.

Next, a description will be given, by use of an example, to a detection method of a polarization direction recorded on the optical recording medium 101 in the case where a reproducing light (circularly polarized light) is irradiated to the optical recording medium 101 in which anisotropy in emission intensity (fluorescence intensity in this embodiment) occurs according to the polarization direction of the recording light of the linearly polarized light, and the emission light (corresponding to the fluorescence in this embodiment) emitted from the optical recording medium 101 by the reproducing light is sent to the detection unit 7 through the separation element 5.

In this example, the polarization direction patterns used for recording are four patterns (four-value modulation) of 0 degree, 45 degrees, 90 degrees, and 135 degrees similarly to the polarization directions in which the light amount is measured by the light amount measurement device 73, and the detection in the case where the polarization direction of 90 degrees among them is recorded will be considered. Incidentally, the recording layer 13 is formed by doping polymethyl methacrylate with DPVA, the concentration of DPVA with respect to polymethyl methacrylate is 1.0 × 10⁻³M, and the thickness of the recording layer 13 is 30 µm.

At this time, the reproducing light (circularly polarized light) is irradiated to the optical recording medium 1, and when the fluorescence emitted from the optical recording medium 101 by the reproducing light is sent to the detection unit 7 through the separation unit 5, from Fig. 12, the ratio of the light amounts measured at the respective condensing sections 73A, 73B, 73C and 73D is almost 1:0.8:0.65:0.8. Thus, it is detected that the recorded polarization direction is 90 degrees corresponding to the condensing section 73C at which the light amount is smallest.

In this example, the reproducing light (circularly polarized light) is irradiated to the optical recording medium 101, and in the case where the emission light emitted from the optical recording medium 101 by the reproducing light is sent to the detection unit 7 through the separation element 5, the number of the diffraction region patterns (four of A to D) of the polarization hologram 71 is equal to the number of the polarization direction patterns (four patterns of 0 degree, 45 degrees, 90 degrees, and 135 degrees) used for recording. The polarization direction of light condensed on each condensing section is made the same as the polarization direction of light used for recording. In this case, in the emission light emitted from the optical recording medium 101, the light amount of the condensing section corresponding to the recorded polarization direction becomes minimum. Accordingly, by using this, the recorded polarization direction can be detected.

Besides, also in the case where the number of polarization direction patterns used for recording is different from the number of diffraction region patterns of the polarization hologram 71, the polarization direction recorded on the optical recording medium 101 can be detected. In this case, various calculations are performed from the light amounts of lights condensed on the respective condensing sections, and with respect to the emission light from the optical recording medium 1, the polarization direction in which the light amount is smallest is detected. Thus, it is necessary to pay attention to the fact that as the number of polarization direction patterns used for recording becomes large, the S/N is decreased.

When the structure of the detection unit 7 is made as described above, plural specified lights having the different polarization direction respectively are simultaneously extracted in the separated state out of the light from the optical recording medium 1, 101, the light amount measurement on each of the plural specified lights is simultaneously performed, and the polarization direction recorded on the optical recording medium 1, 101 can be detected by using the light amount ratio. Thus, as compared with a method in which plural specified lights having a different polarization direction respectively are sequentially extracted out of the light from the optical recording medium 1, 101 by rotating a light detector, and the light amounts of the extracted lights are respectively measured, high speed reproduction becomes possible. Besides, since the light amount ratio is used, the fluctuation in the light mount of the reproducing light does not have an influence.

Besides, since each of the diffraction region patterns A, B, C and D of the polarization hologram 71 is provided at plural positions, the influence of a scratch or the like of a disk can be suppressed. That is, high S/N reproduction becomes possible.

Incidentally, the invention is not limited to the above embodiments, and various modifications can be made within the scope not departing from the gist of the invention. For example, the shape of the diffraction plane of the polarization hologram is not limited to the strip shape. Besides, although the diffraction regions of the polarization hologram are made four kinds of A to D, the number of patterns of the diffraction regions is not limited to this.

Besides, definitely, the optical pickup apparatus of the embodiment can reproduce also the optical recording medium which is disclosed in patent document 1 (JP-A-11-238251) and performs multi-value recording by causing the optical recording material to function as the 1/2 wavelength plate or the 1/4 wavelength plate.

The invention is effective as the optical pickup apparatus and the reproducing method.

## Claims

1. An optical pickup apparatus comprising a detection unit that receives light from an optical recording medium and detects information recorded on the optical recording medium, wherein
the detection unit includes an optical element to simultaneously extract plural specified lights having a different polarization direction respectively in a separated state from the light from the optical recording medium, and a light amount measurement unit to simultaneously perform light amount measurement on each of the plural specified lights extracted by the optical element.

2. The optical pickup apparatus according to claim 1, wherein the optical element extracts light from plural positions with respect to each of the plural specified lights.

3. The optical pickup apparatus according to claim 1 or 2, wherein the optical element is a polarization hologram.

4. The optical pickup apparatus according to any one of claims 1 to 3, further comprising
a light source, and
between the light source and the optical recording medium, a circularly polarized light generation unit to convert light from the light source into a circularly polarized light and a spatial light modulation unit to convert a polarization direction of the light from the light source, wherein the circularly polarized light generation unit and the spatial light modulation unit are selectively used as needed.

5. The optical pickup apparatus according to any one of claims 1 to 3, further comprising
a light source, and
between the light source and the optical recording medium, one element to function as circularly polarized light generation means for converting light from the light source into a circularly polarized light and spatial light modulation means for converting a polarization direction of the light from the light source.

6. The optical pickup apparatus according to claim 5, wherein the one element is a polarization rotation element.

7. An optical reproducing method for reproducing information recorded on an optical recording medium by irradiating light to the optical recording medium, comprising a step of
simultaneously extracting plural specified lights having a different polarization direction respectively in a separated state from light from the optical recording medium, and
simultaneously performing light amount measurement on each of the plural specified lights.
